# EUROPEAN PATENT SPECIFICATION

(11) **EP 4 225 621 B1**
(45) Date of publication and mention of the grant of the patent: **05.08.2026**
(21) Application number: 20956875.7
(22) Date of filing: 05.10.2020
(51) Int. Cl.: B60W 30/08, B60R 19/26, B60R 19/38, B60R 21/0136, B60W 10/04, B60W 10/06, B60K 28/14

(54) **SAFETY BUMPER ASSEMBLY AND ROBOTIC VEHICLE COMPRISING THE SAME**
SICHERHEITSSTOSSFÄNGERANORDNUNG UND DAMIT AUSGESTATTETES ROBOTERFAHRZEUG
ENSEMBLE PARE-CHOCS DE SÉCURITÉ ET VÉHICULE ROBOTISÉ LE COMPRENANT

(43) Date of publication of application: 16.08.2023
(73) Proprietor: Deere & Company, Moline, IL 61265 (US)
(72) Inventor: CRINKLAW, David, Kingsburg, CA 93631 (US); SCHAPANSKY, Chase, Fresno, CA 93727 (US); THOMPSON, Gary, Sanger, CA 93657 (US)
(74) Representative: Isarpatent
(86) International application number: PCT/US2020/054324
(87) International publication number: WO 2022/075971

(56) References cited:
- CN-A- 108 657 094
- CN-U- 207 389 129
- GB-B- 2 022 891
- JP-A- H1 120 579
- US-A- 1 251 639
- US-A- 1 755 207
- US-A- 3 443 658
- US-A1- 2008 060 450
- US-A1- 2016 311 389
- US-A1- 2019 381 883

## Description

### BACKGROUND

### 1. Field of the Invention

The present invention pertains to safety bumper assemblies, in general, and robotic vehicles having such a safety bumper assembly in particular, specifically for autonomous vehicles used as a robotic agricultural spraying equipment.

### 2. Background Technology

Modern agricultural equipment can be hazardous and labor-intensive to operate. For example, current orchard spraying devices have exposed appendages and exposed moving parts that produce an aerosol of chemicals dangerous for human consumption. This is particularly the case when pesticides and fungicides are being sprayed on the orchard trees. Equipment operators are required to wear confining respirators and goggles to avoid incidental contact with the sprayed agent.

Additionally, current orchard spraying devices can be clumsy and difficult to operate in an environment of a dense tree canopy, where the boughs of the trees hang low and the space between trees is thereby limited. Typical equipment contacts the low-hanging tree boughs and may cause harm to the trees. Also, the operator must be confined in a protective cab to prevent being jabbed and whipped by a low hanging tree canopy. Moreover, operation of modern agricultural equipment can be a slow and tedious affair. Operators must stop periodically to remove their protective gear to rest, hydrate and eat, in addition to other rest stops. As a result, equipment operation progresses in fits and starts, continually limited by exhaustion and injury, governmental restrictions, and basic human needs. What is needed is an automated, robotic agricultural system that obviates the need for the human operators who are at risk by operating existing equipment.

For these reasons, autonomous vehicles are increasingly used in agricultural equipment, specifically for applications that are hazardous and labor-intensive. A robotic agricultural system and method is for instance known from the international patent application published under the publication number WO 2018044376 (A1). For safe operation, it is particularly important to protect operating personnel and bystanders alike. Further, it is desired to protect the vehicle itself from damage, as well as possible obstacles it may hit. This requires that the autonomous vehicle stops automatically when coming into contact with a person or an object.

A known approach for accomplishing such vehicle stopping and engine shutoff is providing stopping bumpers made of a relatively soft material that is compressed by a force acting between a person or object and the bumper resulting in compression of the soft material that caves in by some distance. The soft material can have either contact strips inside or a use a pressure-induced conductive material wherein the inner padded material itself is the source of electrical conductivity establishing electrical conductivity that can shut off the engine in various ways, for example by actuating a switch or short-circuiting the electric engine ignition. The engine shutdown circuit can be done countless different ways. The vehicle engine can be shut off in many different ways as long as some sort of electrical signal is generated. Depending on how the engine is controlled, this may for example be accomplished by an electrical switch, a mechanical switch or a CAN Bus.

Also other approaches such as tensioning a cable extending on the outside of the vehicle by a contact with an obstacle are known, actuating a switch shutting down the vehicle engine.

While this concept may work for many applications, specifically for slow moving robotic vehicles of low to moderate weight, a problem particularly for heavier autonomous vehicles such as robotic agricultural spraying vehicles is that such soft material safety bumpers can reasonable only be made with limited thickness, say 5-10 inches, for preventing to make the soft material safety bumper too bulky. Further, the entire cave in distance for the soft material is limited, depending on its coefficient of elasticity, which limits structurally not only the useful cave in distance for actuating the stop switch, but more importantly the cave in distance will not be sufficiently long for fully stopping the vehicle before the full cave in distance is reached. As a result, persons, objects and the autonomous vehicle itself still experience some significant impact. This applies particularly for heavier autonomous vehicles as used in robotic agricultural spraying equipment, even if moving just at about pedestrian speed of 2-3 mph. Such vehicles have considerable weight since the spraying requires significant power and in addition the tank holding the spraying agent adds to the weight.

From the Chinese patent application publication CN 108657094 A a safety bumper assembly according to the pre-characterizing part of claim 1 is known. Other safety bumper assemblies are known from the United States patents US 3,443,658 and US 1,755,207, the Chinese utility model CN 207389129 U and the Japanese patent application publication JP H11 20579 A
An object of the invention is therefore to control the forces acting between the person or object and the vehicle upon contact from the first contact all the way to the full stopping of the autonomous vehicle.

This and other objects of the invention are achieved by the safety bumper assembly as claim in claim 1 and a vehicle as claimed in claim 8, comprising said safety bumper assembly as claim in claim 1, and by the method as claimed in claim 12, which is a method of operating the vehicle as claimed in claim 8. Advantageous further embodiments are claimed in the dependent claims.

### BRIEF DESCRIPTION OF THE DRAWINGS

Figure 1 shows schematically a plan view of a vehicle with a safety bumper assembly according to the invention;
Figure 2 shows a side view of the vehicle shown in Figure 1;
Figure 3 shows a front view of the vehicle shown in Figure 1;
Figure 4 shows a rear view of the vehicle shown in Figure 1;
Figure 5 shows a partial perspective top view of the front of the autonomous vehicle carrying the safety bumper assembly according to the invention, with the bumper bar assuming its neutral position with both the first bumper shaft 2 and second bumper shaft 3 being fully extended to their outermost positions;
Figure 6 shows a partial perspective view similar to Figure 5, with a force acting on the outer region of the bumper bar that is closer to the second bumper shaft being depressed to an inner position while the first bumper shaft remains being biased to its outermost position;
Figure 7 shows a perspective front view of an embodiment of the support structure as a partial assembly of said safety bumper assembly according to the invention;
Figure 8 shows a perspective rear view of an alternative embodiment of the safety bumper assembly according to the invention;
Figure 9 shows a top plan view of yet another alternative embodiment of the safety bumper assembly according to the invention; and
Figure 10 shows a perspective rear view for one of the bumper shafts including a switch mechanism for shutting down the vehicle engine.

### DETAILED DESCRIPTION OF THE DRAWINGS

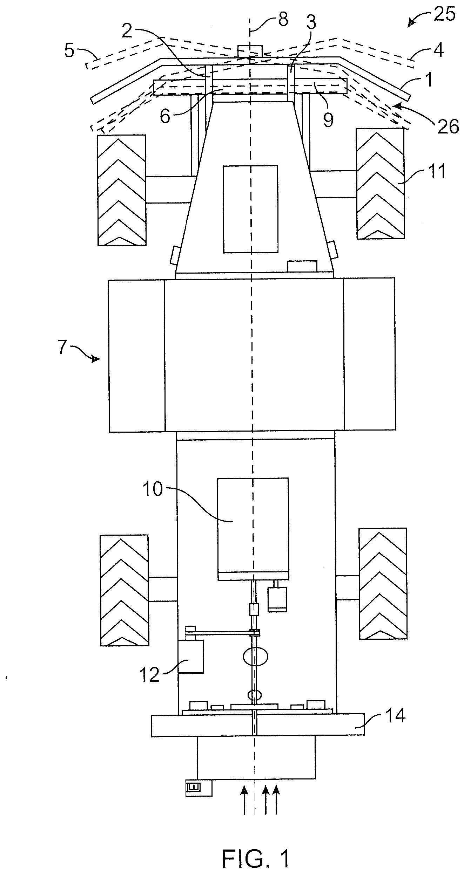

Figure 1 schematically shows a top view of an autonomous vehicle, in this example a robotic agricultural spraying vehicle 7. At the front of the vehicle, in solid lines, the bumper bar 1 is shown in its foremost, neutral position without any external forces acting on the bumper bar, for instance during normal operation without any contact between the bumper bar and an object. The bumper bar 1 is hinged to the first bumper shaft 2 and a second bumper bar shaft 3. The hinging mechanism will be explained further below in connection with more detailed views of the bumper assembly mechanism. The interrupted lines show various possible positions of the bumper bar 1.

The various positions are denoted by reference numerals 4, 5 and 6. Reference numeral 4 illustrates a bumper bar position where an obstacle is hit substantially on the left side of the vehicle with the first bumper shaft 2 assuming its inner most position while the second bumper shaft 3 remains in its outermost position. This means that only the first bumper shaft 2 is pushed inwards, for instance against a resistance force which could be generated by a pressurized gas struts, coil springs, or constant-force springs. In the embodiment shown, a first gas strut 20 and a second gas strut 21 are used, biasing the respective bumper shafts 2 and 3 forward. Since the contact is on the left side of the vehicle 7, the main force is transmitted via the bumper bar 1 to the first bumper shaft 2. Also some force is transmitted to the second bumper shaft 3. Depending on how great that force is, the second bumper shaft might not be pushed inwards at all, namely if the force is too low to overcome the resistance force by the gas struts 20 and 21 biasing the first and second bumper shafts forward. The bumper bar might be allowed to abut against the left wheel which would therefore provide a soft stop. However, as further discussed below, the stop can also be implemented in addition or in the alternative through the bumper shaft abutting against a stop.

Position 5 shows the opposite position in interrupted lines, mirroring position 4 for the case when the bumper bar is hit by the object predominantly on the outer right side of the bumper bar 1 and therefore the second bumper shaft 3 is pushed inwards while the first bumper shaft 2 remains substantially biased to its outermost position.

Bumper bar position 6 shown in interrupted lines demonstrates the scenario where the object hits the bumper bar 1 approximately in its center, meaning in the vicinity of the centerline 8 of the vehicle 7 and with it the centerline of the bumper bar 1 that is in this embodiment mounted centrally and is symmetrical. Other mounting positions and shapes, for instance non-symmetrical shapes, are also possible, for example to adapt to an asymmetric vehicle design.

It is noted that any positions that could lie between the positions 4, 5 and 6 are possible, for instance if the bumper bar hits the obstacle off-center, but somewhere in between the center of the bumper bar and the outer end, which may cause the first bumper shaft 2 to be pushed further inwards to an inner position than the second bumper shaft 3. That would in essence superimpose a rotational motion and a translatory motion of the bumper bar. Within its maximum range that is determined by the maximum movement range of the first and second bumper shafts 2 and 3, the bumper bar 1 may assume any angular position and longitudinal position, depending on how far the first and second bumper shafts are pushed to an inner position.

As will be discussed in more detail, if the bumper bar reaches a certain position, the engine 10 of the vehicle 7 is shut off, for instance by a switch 40 actuated by any of the first and second bumper bars 2 and 3. In addition, by actuating the switch, it is possible to activate a braking mechanism through the control of the autonomous vehicle, braking some or all of the wheels 11 while the vehicle engine 10 has been shut down.

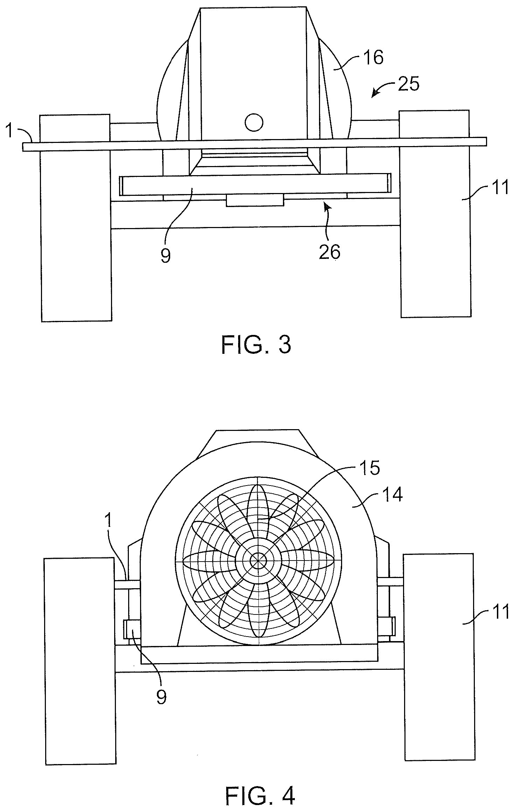

In the case of autonomous agricultural vehicles, movement is typically relatively slow and needs to be controlled within a narrow range to allow the job to be done, for instance spraying of crops like in the incident example. For that purpose, the engine typically drives a hydraulic pump 12, which provides pressured hydraulic oil to drive motors powering the wheels 11. At the rear of the vehicle, a fan housing 14 is provided, better seen in Figure 4 showing a rear view of the autonomous vehicle. The fan housing 14 houses a fan 15 for generating the spraying air flow distributing spraying agent that is ejected into the air flow through spray nozzles.

Underneath and offset to a more inner position that is closer to the body of the vehicle 7, a second safety bumper 9 is provided. Such a second safety bumper 9 may be of conventional design, include a resilient soft material, and if contacted by an object, caves in by a distance and this way establishes electrical conductivity within the bumper can shut off the engine in various ways known in the prior art.

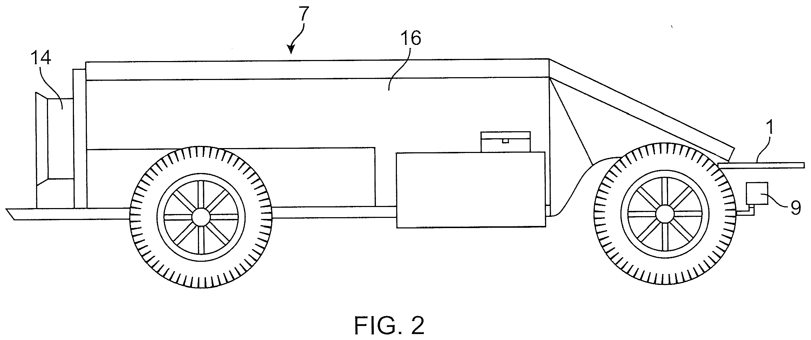

The correlation between the bumper bar 1 and the second safety bumper 9 is best seen in Figure 2 showing a side view of the autonomous vehicle 7. The second safety bumper is either supported at the back or from below, allowing at the front soft material that can be depressed by an object. The purpose of the second safety bumper 9 is to provide a safety shutoff mechanism for low objects while the primary safety shutoff assembly is the one including the bumper bar 1. The reason why the bumper bar 1 is on a more elevated position is particularly to protect persons for which purpose the bumper bar 1 could be for instance waist height. Also, in orchards, branches could form an obstacle that would not be considered by the second safety bumper 9.

Figure 3 shows the front of the autonomous vehicle 7, including a view of a round middle portion, the part of which holding the spraying agent.

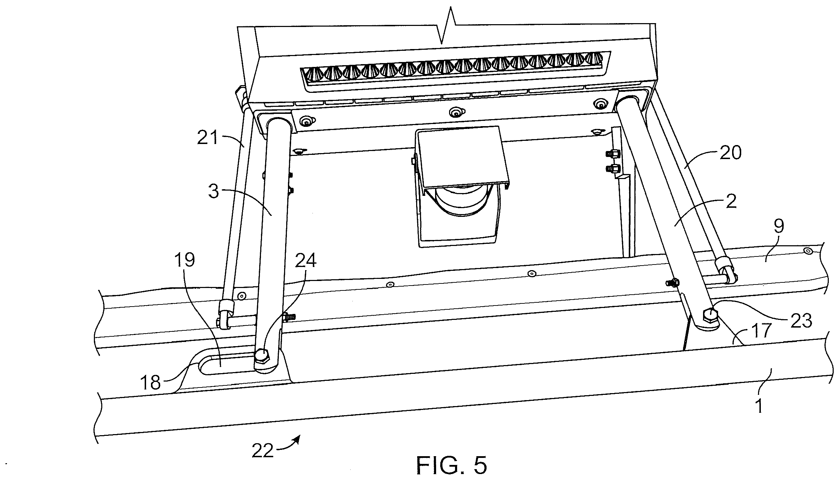

Figure 5 shows a partial perspective top view of the front of the autonomous vehicle carrying the safety bumper assembly 25, 26 according to the invention. The same reference numerals are shown as in Figures 1 - 4. This Figure 5 shows more details about the specific hinge mechanism hinging the bumper bar 1 to the first bumper shaft 2 and second bumper shaft 3. In this embodiment, a first hinge 17 hinges the bumper bar 1 to the first bumper shaft 2. This first hinge 2 is a simple rotational hinge, allowing only a rotational degree of freedom. The bumper bar 1 is hinged by a second hinge 18 to the second bumper shaft 3. This hinge allows both a rotational and a translatory degree of freedom via the elongated hole 19. This combination of hinges 17 and 18 with different properties has proven to be particularly advantageous, namely holding the bumper bar 1 in its defined outermost and neutral position during normal operation when the bumper bar 1 is not subjected to any external forces or only relatively minor external forces. At the same time, by a first gas strut 20 pushing the first bumper shaft 2 to its outermost position and gas strut 21 pushing the second bumper shaft 3 to its outermost position, the bumper bar 1 is biased into a defined position that can only change if an external force, such as by hitting an object, is exerted on the bumper bar 1, pushing in one or both of the first and second bumper shafts 2 and 3 against the resistance elements in form of the first and second gas struts 20 and 21, respectively. While using an elongated hole 19 for a second, translatory degree of freedom of on one of the first and second bumper shafts 2, 3 with respect to the bumper bar 1 has proven advantageous alternatives are possible, for instance linking the first or the second bumper shaft 2, 3 by an elastic material to the bumper bar.

If for instance an external force is exerted on the bumper bar 1 closer to the right side of the vehicle as shown in Figure 1, which is closer to the second bumper bar 3 and on the left side in Figure 5, it is evitable that relatively little force is exerted by the bumper bar 1 on the first bumper shaft 2 in comparison to the second bumper shaft 3 so that at least predominantly only the bumper shaft 3 is pushed inwards, resulting in a mere rotational movement of the bumper bar around the pivot point 23 that is determined by the first hinge 17. The direction of the rotational movement is, in the view according to Figure 1, in a clockwise direction. At the same time, a translatory movement happens at the second hinge 18, namely of the pivot point 24 moving in Figure 5 from the right end towards the left end of the elongated hole 19.

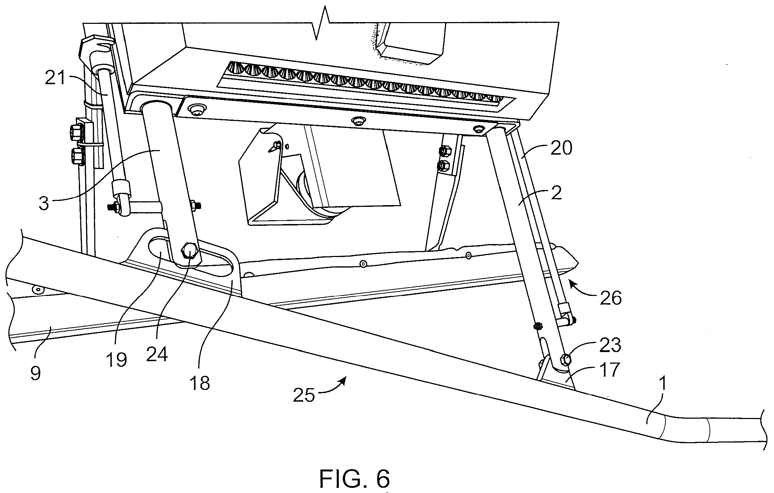

Figure 6 shows another perspective front view similar to the one shown in Figure 5, but here in contrast to Figure 5 with the bumper bar 1 in a position where a force is exerted on the bumper bar 1 at the outer end thereof closer to the second bumper shaft 3. Notably, the second pivot point 24 has moved along the elongated hole 19. The second bumper shaft 3 is pushed in, while the first bumper shaft 2 still assumes at least essentially its outermost position.

Conversely, if an object hits the bumper bar 1 more on the left side of the vehicle 7 according to Figure 1, namely at the outer end closer to the first bumper bar 2, the bumper bar 1 again pivots around the pivot point 23, this time in the view according to Figure 1 counterclockwise, while like in the clockwise rotation the pivot point 24 performs a translatory movement along the elongated hole 19 in the drawings shown in Figure 5 from the right side to the left side. Notably, the movement of the second pivot point 24 within the elongated hole is in both cases going from a position at the end of elongated hole 19 that is closest to the center line 8 toward the opposite end of the elongated hole that is more remote from the center line, regardless of the bumper bar rotating in a clockwise or counterclockwise direction. In the foremost, neutral position of the bumper bar as shown in solid lines in Figure 1 the pivot point 24 assumes the position at an end of the elongated hole 19 which end is closest to the center line 8. Apart from the first hinge 17 allowing only rotational movement, and defining in connection with the second hinge 18 a 2 point attachment, locating the elongated hole such that a bolt that may form the second pivot point 24 abuts against the centermost end of the elongated hole additionally helps in holding the bumper bar in its foremost, neutral position when the bumper bar 1 is subjected to only minor forces, such as during normal operation.

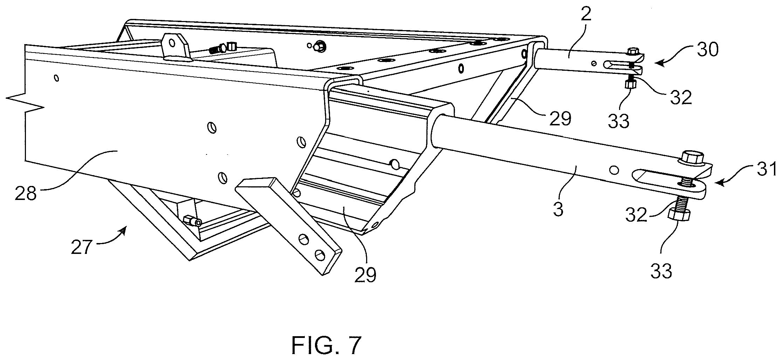

Figure 7 shows a partial assembly showing specifically the support structure 27. This support structure 27 comprises a vehicle frame 28. This vehicle frame 28 may be formed by welding beams such as rectangular profiled beams or U-shaped or T-shaped steel beams together to a vehicle frame 28. The frame 28 accommodates in this example Ultra-high-molecular-weight polyethylene (UHMW) elements 29 connecting to the frame 28 of the vehicle (7) and has built in bushings or bearings to allow for smooth and consistent movement of the bumper. At the side of the frame that is in the drawing plane in front, the UHMW element 29 has not yet been fully pushed into the vehicle frame 28 while the UHMW element 29 shown at back in relation to the drawing plane has been fully pushed into a beam of the vehicle frame 28, assuming its final mounting position. Instead of UHMW elements, many other types of materials may be used, but according to a preferred embodiment, black UHMW is used. It could also be made from aluminum, steel, or any composite plastic. Inside of the housing material, there are bushings or bearings that are pressed or secured in to keep the first and second bumper shafts 2, 3 rigid. These supports structures 27 are rigidly mounted to the vehicle frame 28, and may be bolted to the frame, welded, or molded into the frame casting. The rigidity ensures that if the bumper bottoms out before the machine stops, there will be no structural damage done to the safety bumper assembly 25 or the vehicle frame 27.

The outer shaft ends 30 and 31 of the first bumper shaft 2 and the second bumper shaft 3 are forked at the end and provided with a vertical through bore allowing insertion of bolts or screws. Nuts 33, for instance designed as locknuts, can be screwed onto the bolts or screws 32. When assembling, the bumper bar 1 can be easily fixed to the shafts 2 and 3 by accommodating tabs for the first hinge 17 having a simple through bore and for the second hinge 18 the elongated hole 19 within the forked portion and the ends 30, 31 with the screw penetrating said through bore and the elongated hole 19 and having locknuts screwed on the lower end of the screws 32 allowing enough tolerance for smooth rotation of the bumper bar 1 relative to the bumper shafts 2 and 3.

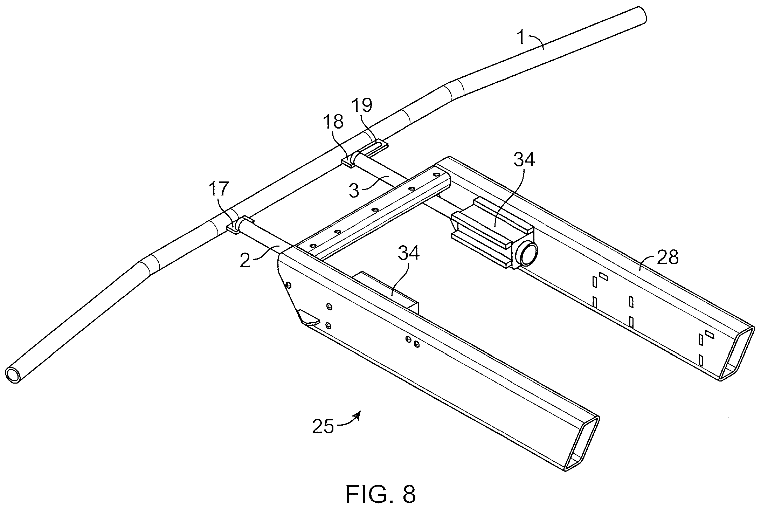

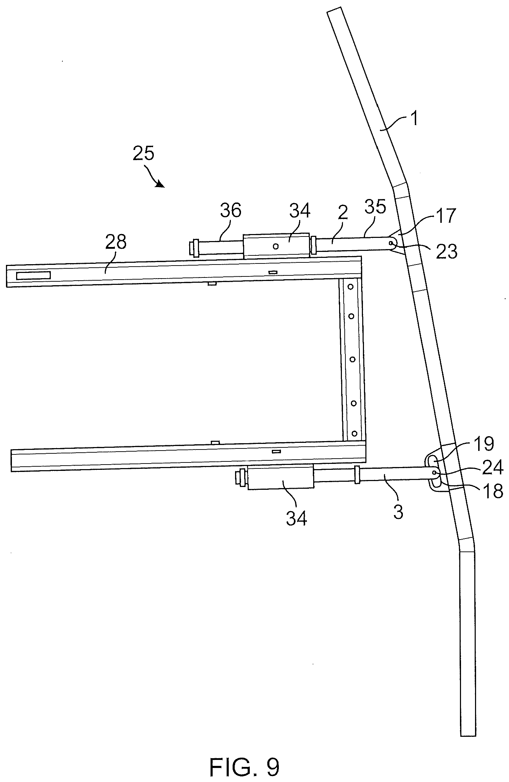

Figures 8 and 9 show variances of the bumper assembly 25. In Figure 8, a perspective rear view of the safety bumper assembly 25, linear ball bearings 34 are attached to an inner wall of the vehicle frame 28. Instead of the vehicle frame 28, it is also possible to provide a separate frame inserted as a whole into the vehicle and attached to the vehicle frame 28.

In contrast to the embodiment shown in Figure 8, Figure 9 shows a plan view of another embodiment where the linear ball bearings 34 are attached to outer walls of the frame 28. In Figure 9, the second bumper shaft 3 still assumes its outermost bumper shaft position, while the first bumper shaft is pushed in. This position is denoted by reference numeral 4 in Figure 1. In Figure 9, also the outer bumper shaft portion 35 and the inner bumper shaft portion 36 are shown.

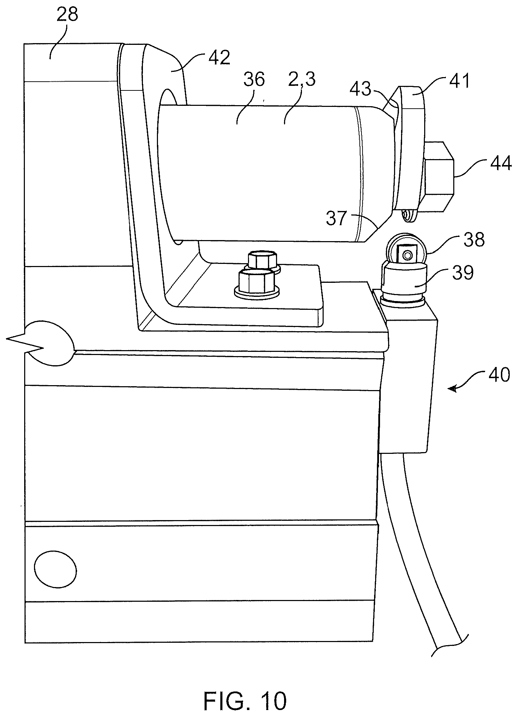

Figure 10 shows a perspective rear view for the embodiment shown in Figures 7, there showing a perspective front view. Shown in Figure 10 is the inner bumper shaft portion 36. It can be designed the same for both the first bumper shaft 2 and the second bumper shaft 3. When the bumper shaft is pushed inwards to an inner position by a certain distance, a chamfered end 37 engages a switch wheel 38 and upon further pushing inwards of the respective first or second bumper shaft 2, 3, the wheel is depressed towards the bottom pushing down a cylinder 39 bearing the switch wheel 38 and therefore actuating the switch 40. Upon actuating the switch 40, the ignition of the engine may be cut off, therefore stopping the engine and consequently the hydraulic pump delivering pressurized hydraulic oil to the vehicle drive motors at the wheels 11. In the alternative or in addition, the switch may actuate a valve, shutting off the hydraulic oil flow to the drive motors. Further, the switch may actuate brakes stopping the wheels 11 of the vehicle from rotating. Such addition braking action may further expedite bringing the autonomous vehicle to a complete stop before the bumper bar 1 has reached its innermost position by having the first bumper shaft 2 and/or the second bumper shaft 3 pushed inwards to their innermost positions.

Further demonstrated in Figure 10 is a stop plate 41 which may abut against a rear face 42 of the frame 28 or any element attached to the frame 28. This provides a stop for the outermost position of the bumper shafts 2 and 3. The gas struts 20 and 21 or other resistance elements can bias the stop plate 41 against said rear face 42 when the bumper bar 1 assumes its outermost, neutral position. The stop plate 41 could be simply screwed to a rear face 43 of the bumper shaft 2, 3 by a screw 44.

The following is a list of elements by reference numerals
bumper bar 1
first bumper shaft 2
second bumper shaft 3
bumper bar position 4
bumper bar position 5
bumper bar position 6
vehicle 7
centerline 8
second safety bumper 9
vehicle engine 10
wheels 11
hydraulic pump 12
fan housing 14
fan 15
vehicle body 16
first hinge 17
second hinge 18
elongate hole 19
first gas strut 20
second gas strut 21
first pivot point 23
second pivot point 24
first safety bumper assembly 25
first safety bumper assembly 26
support structure 27
vehicle frame 28
ultra-high-molecular-weight polyethylene (UHMW) elements 29
outer shaft ends 30 and 31
screws 32
linear ball bearings 34
outer bumper shaft portion 35
inner bumper shaft portion 36
chamfered end 37
switch wheel 38
cylinder 39
switch 40
stop plate 41
rear face 42
rear face 43
screw 44

The examples used herein are intended merely to facilitate an understanding of ways in which the invention may be practiced and to further enable those of skill in the art to practice the embodiments of the invention. Accordingly, the examples and embodiments herein should not be construed as limiting the scope of the invention, which is defined solely by the appended claims and applicable law. Moreover, it is noted that like reference numerals represent similar parts throughout the several views of the drawings, although not every Figure may repeat each and every feature that has been shown in another Figure in order to not obscure certain features or overwhelm the Figure with repetitive indicia.

## Claims

1. A safety bumper assembly (25) for a vehicle (7) shutting off a vehicle engine (10) when the vehicles (7) hits an obstacle, said safety bumper assembly (25) comprising:
a bumper bar (1);
at least a first bumper shaft (2) and a second bumper shaft (3), each of which having an outer bumper shaft portion (35) with an outer shaft end (30, 31) and an inner bumper shaft portion (36) spaced from the outer bumper shaft portion (35) and having an inner shaft end, wherein said outer bumper shaft portions (35) of the first bumper shaft (2) and the second bumper shaft (3),are attached to the bumper bar (1);
a support structure (27) accommodating the at least first and second bumper shafts (2, 3) at their respective inner bumper shaft portions (36) in a movable fashion;
a first resistance element (20) biasing the first bumper shaft (2) and a second resistance element (21) biasing the second bumper shaft (3) to respective outermost positions where said outer bumper shaft ends (30, 31) are spaced by a first distance from the support structure (27); and
a switch (40) actuated by inward movement of at least one of the first and second bumper shafts (2, 3) when at least one of the outer bumper shaft ends (30, 31) of the least one of the first and second bumper shafts (2, 3) has reached an inner position that is located at a second distance from the support structure (27) that is shorter than said first distance;
**characterized in that**
the first bumper shaft (2) and the second bumper shaft (3) are movable relative to each other; and
the first bumper shaft (2) is hinged by a first hinge (17) to the bumper bar (1) allowing substantially only a rotational movement between the first bumper shaft (2) and the bumper bar (1), and the second bumper shaft (3) is hinged by a second hinge (18) to the bumper bar (1) allowing both a rotational and a linear movement between the second bumper shaft (3) and the bumper bar (1).

2. The safety bumper assembly (25) according to claim 1, wherein the support structure (27) comprise at least one of linear slide bushings or linear ball bearings (34) supporting the inner bumper portions (36) of the first and second bumper shafts (2, 3) in a linearly slidable fashion with respect to the support structure (27).

3. The safety bumper assembly (25) according to claim 1, wherein said second hinge (18) comprises an elongated hole (19) extending in said outermost position substantially perpendicularly to the respective first and second bumper shafts (2, 3).

4. The safety bumper assembly (25) according to claim 1, wherein the first and second resistance elements (20, 21) are one of gas struts and springs.

5. The safety bumper assembly (25) according to claim 1, wherein the inner bumper shaft portions (36) of at least one of said first and second bumper shafts (2, 3) have a chamfered end (37) that engages the switch (40) when the at least one of said first and second bumper shafts (2, 3) has moved from their respective outermost position towards the inner position, shutting off the vehicle engine (10) when the respective one of said first and second bumper shafts (2, 3) has reached the inner position.

6. The safety bumper assembly (25) according to claim 1, wherein a first stop element (41) is attached to the inner shaft portion (36) of at least one of the first and second bumper shafts (2, 3) and engages a respective second stop element (42) when at least one of the first and second bumper shaft (3) is biased by the resistance elements (20, 21) to its outermost position.

7. The safety bumper assembly (25) according to claim 6, wherein the first stop element (41) is attached to an end face (43) at the inner end of the at least one of the first and second bumper shafts (2, 3) and abuts against the support structure (27) or vehicle frame (28) or elements attached thereto when at least one of the first and second bumper shafts (2, 3) is biased by the resistance elements (20, 21) to the outermost position.

8. A vehicle (7) comprising the safety bumper assembly (25) according to claim 1, further comprising:
a vehicle engine (10);
a vehicle frame (28) supporting vehicle wheels (11);
a vehicle front where the safety bumper assembly (25) is attached in such a position that the bumper bar (1) forms a frontmost vehicle portion when at least one of the the first bumper shaft (2) and second bumper shaft (3) assumes its outermost position;
wherein the support structure (27) is integrated into the vehicle frame (28).

9. The vehicle (7) according to claim 8, wherein the support structure (27) is integrated into the vehicle frame (28) by an Ultra-high-molecular-weight polyethylene (UHMW) element (29) inserted into the vehicle frame (28), wherein said UWHM element (29) carries at least one of linear slide bushings or linear ball bearings (34) supporting the first and second bumper shafts (2, 3) in a linearly slidable fashion with respect to the UWHM element (29).

10. The vehicle (7) according to claim 8, wherein the vehicle frame (28) comprises vehicle frame beams extending in the longitudinal direction of the vehicle (7) and the support structure (27) comprises ball bearings (34) attached to the vehicle frame beams.

11. The vehicle (7) according to claim 8, wherein said safety bumper assembly (25) is a first safety bumper assembly (25) and the vehicle (7) further comprises a second safety bumper assembly (26) underneath and closer to the support structure (27) than the bumper bar (1) of the said safety bumper assembly (25), said second safety bumper assembly (26) comprising a resilient soft material that is compressed when coming into contact with an obstacle, wherein a switch is actuated in the compressed state of the second bumper assembly (26) shutting off the vehicle engine (10).

12. A method of operating a vehicle (7) according to claim 8, comprising:
upon the bumper bar (1) contacting an obstacle, actuating a switch (40) shutting off the vehicle engine (10), wherein the switch (40) is actuated by inward movement of at least one of the first and second bumper shafts (2, 3) when at least one of the outer bumper shaft ends (30, 31) of the least one of the first and second bumper shafts (2, 3) has reached an inner position that is located at a second distance from the support structure (27) that is shorter than said first distance; and
stopping the vehicle (7) in its entirety before a respective one of the outer bumper shaft ends (30, 31) of the at least one of said first and second bumper shafts (2, 3) has reached its innermost position.

13. The method according to claim 12, further compromising upon the bumper bar (1) contacting an obstacle off-center with respect to the vehicle (7), moving only the bumper shaft of said first and second bumper shafts (2, 3) that is closest to a position where the bumper bar (1) contacts an object from its outermost position to the inner position, while the respective other one of the first and second bumper shafts (2, 3) remains substantially in its outermost position.

14. The method according to claim 12, further compromising upon the bumper bar (1) contacting an obstacle off-center with respect to the vehicle (7), moving both said first and second bumper shafts (2, 3) inwards from their outermost positions to an inner position, wherein the bumper shaft of the first and second bumper shafts (2, 3) that is closest to a position where the bumper bar (1) contacts an object is pushed inwards by a longer distance to an inner position than the other of said first and second bumper shafts (2, 3) that is more remote from the location where the where the bumper bar (1) contacts the object.

## Patentansprüche

1. Sicherheitsstoßfängeranordnung (25) für ein Fahrzeug (7), die einen Fahrzeugmotor (10) abschaltet, wenn das Fahrzeug (7) auf ein Hindernis trifft, wobei die Sicherheitsstoßfängeranordnung (25) umfasst:
eine Stoßfängerleiste (1);
mindestens einen ersten Stoßfängerschaft (2) und einen zweiten Stoßfängerschaft (3), von denen jeder einen äußeren Stoßfängerschaftabschnitt (35) mit einem äußeren Schaftende (30, 31) und einen inneren Stoßfängerschaftabschnitt (36), der von dem äußeren Stoßfängerschaftabschnitt (35) beabstandet ist und ein inneres Schaftende hat, aufweist, wobei die äußeren Stoßfängerschaftabschnitte (35) des ersten Stoßfängerschafts (2) und des zweiten Stoßfängerschafts (3) an der Stoßfängerleiste (1) angebracht sind;
eine Stützstruktur (27), die den mindestens ersten und zweiten Stoßfängerschaft (2, 3) an ihren jeweiligen inneren Stoßfängerschaftabschnitten (36) in einer beweglichen Weise aufnimmt;
ein erstes Widerstandselement (20), das den ersten Stoßfängerschaft (2) in eine jeweilige äußerste Position vorspannt, und ein zweites Widerstandselement (21), das den zweiten Stoßfängerschaft (3) in eine jeweilige äußerste Position vorspannt, in denen die äußeren Stoßfängerschaftenden (30, 31) um eine erste Distanz von der Stützstruktur (27) beabstandet sind; und
einen Schalter (40), der durch eine Einwärtsbewegung mindestens eines des ersten und des zweiten Stoßfängerschafts (2, 3) betätigt wird, wenn mindestens eines der äußeren Stoßfängerschaftenden (30, 31) des mindestens einen des ersten und des zweiten Stoßfängerschafts (2, 3) eine innere Position erreicht hat, die sich in einer zweiten Distanz von der Stützstruktur (27) befindet, die kürzer ist als die erste Distanz;
**dadurch gekennzeichnet, dass**
der erste Stoßfängerschaft (2) und der zweite Stoßfängerschaft (3) relativ zueinander beweglich sind; und
der erste Stoßfängerschaft (2) durch ein erstes Scharnier (17) an der Stoßfängerleiste (1) angelenkt ist, wodurch im Wesentlichen nur eine Drehbewegung zwischen dem ersten Stoßfängerschaft (2) und der Stoßfängerleiste (1) erlaubt wird, und der zweite Stoßfängerschaft (3) durch ein zweites Scharnier (18) an der Stoßfängerleiste (1) angelenkt ist, wodurch sowohl eine Dreh- als auch eine Linearbewegung zwischen dem zweiten Stoßfängerschaft (3) und der Stoßfängerleiste (1) erlaubt wird.

2. Sicherheitsstoßfängeranordnung (25) nach Anspruch 1, wobei die Stützstruktur (27) mindestens eines von Lineargleitbuchsen und Linearkugellagern (34) umfasst, die die inneren Stoßfängerabschnitte (36) des ersten und des zweiten Stoßfängerschafts (2, 3) in einer linear gleitfähigen Weise in Bezug auf die Stützstruktur (27) stützen.

3. Sicherheitsstoßfängeranordnung (25) nach Anspruch 1, wobei das zweite Scharnier (18) ein Langloch (19) umfasst, das sich in der äußersten Position im Wesentlichen senkrecht zu dem ersten bzw. zweiten Stoßfängerschaft (2, 3) erstreckt.

4. Sicherheitsstoßfängeranordnung (25) nach Anspruch 1, wobei das erste und das zweite Widerstandselement (20, 21) eines von Gasdruckdämpfern und Federn sind.

5. Sicherheitsstoßfängeranordnung (25) nach Anspruch 1, wobei die inneren Stoßfängerschaftabschnitte (36) mindestens eines des ersten und des zweiten Stoßfängerschafts (2, 3) ein geschrägtes Ende (37) aufweisen, das mit dem Schalter (40) in Eingriff gelangt, wenn sich der mindestens eine des ersten und des zweiten Stoßfängerschafts (2, 3) von seiner jeweiligen äußersten Position in Richtung der inneren Position bewegt hat, wodurch der Fahrzeugmotor (10) abgeschaltet wird, wenn der erste bzw. der zweite Stoßfängerschaft (2, 3) die innere Position erreicht hat.

6. Sicherheitsstoßfängeranordnung (25) nach Anspruch 1, wobei ein erstes Endanschlagelement (41) an dem inneren Schaftabschnitt (36) mindestens eines des ersten und des zweiten Stoßfängerschafts (2, 3) angebracht ist und ein jeweiliges zweites Endanschlagelement (42) in Eingriff nimmt, wenn mindestens einer des ersten und des zweiten Stoßfängerschafts (3) durch die Widerstandselemente (20, 21) in ihre äußerste Position vorgespannt wird.

7. Sicherheitsstoßfängeranordnung (25) nach Anspruch 6, wobei das erste Endanschlagelement (41) an einer Endfläche (43) am inneren Ende des mindestens einen des ersten und des zweiten Stoßfängerschafts (2, 3) angebracht ist und an der Stützstruktur (27) oder dem Fahrzeugrahmen (28) oder daran angebrachten Elementen anliegt, wenn mindestens einer des ersten und des zweiten Stoßfängerschafts (2, 3) durch die Widerstandselemente (20, 21) in die äußerste Position vorgespannt ist.

8. Fahrzeug (7), das die Sicherheitsstoßfängeranordnung (25) gemäß Anspruch 1 umfasst, des Weiteren umfassend:
einen Fahrzeugmotor (10);
einen Fahrzeugrahmen (28), der Fahrzeugräder (11) stützt;
eine Fahrzeugfront, wo die Sicherheitsstoßfängeranordnung (25) in einer solchen Position angebracht ist, dass die Stoßfängerleiste (1) einen vordersten Fahrzeugabschnitt bildet, wenn mindestens einer des ersten Stoßfängerschafts (2) und des zweiten Stoßfängerschafts (3) seine äußerste Position einnimmt;
wobei die Stützstruktur (27) in den Fahrzeugrahmen (28) integriert ist.

9. Fahrzeug (7) nach Anspruch 8, wobei die Stützstruktur (27) durch ein Ultra-High-Molecular-Weight (UHMW)-Polyethylenelement, das in den Fahrzeugrahmen (28) eingesetzt ist, in den Fahrzeugrahmen (28) integriert ist, wobei das UHMW-Element (29) mindestens eines von Lineargleitbuchsen und Linearkugellagern (34) stützt, die den ersten und den zweiten Stoßfängerschaft (2, 3) in einer linear gleitfähigen Weise in Bezug auf das UHMW-Element (29) stützen.

10. Fahrzeug (7) nach Anspruch 8, wobei der Fahrzeugrahmen (28) Fahrzeugrahmenholme umfasst, die sich in der Längsrichtung des Fahrzeugs (7) erstrecken, und die Stützstruktur (27) Kugellager (34) umfasst, die an den Fahrzeugrahmenholmen angebracht sind.

11. Fahrzeug (7) nach Anspruch 8, wobei die Sicherheitsstoßfängeranordnung (25) eine erste Sicherheitsstoßfängeranordnung (25) ist und das Fahrzeug (7) des Weiteren eine zweite Sicherheitsstoßfängeranordnung (26) umfasst, die sich unterhalb und näher an der Stützstruktur (27) befindet als die Stoßfängerleiste (1) der ersten Sicherheitsstoßfängeranordnung (25), wobei die zweite Sicherheitsstoßfängeranordnung (26) ein federndes, weiches Material umfasst, das bei Kontakt mit einem Hindernis zusammengedrückt wird, wobei im zusammengedrückten Zustand der zweiten Stoßfängeranordnung (26) ein Schalter betätigt wird, der den Fahrzeugmotor (10) abschaltet.

12. Verfahren zum Betreiben eines Fahrzeugs (7) nach Anspruch 8, umfassend:
nachdem die Stoßfängerleiste (1) mit einem Hindernis in Kontakt gekommen ist, Betätigen eines Schalters (40), der den Fahrzeugmotor (10) abschaltet, wobei der Schalter (40) durch eine Einwärtsbewegung mindestens eines des ersten und des zweiten Stoßfängerschafts (2, 3) betätigt wird, wenn mindestens eines der äußeren Stoßfängerschaftenden (30, 31) des mindestens einen des ersten und des zweiten Stoßfängerschafts (2, 3) eine innere Position erreicht hat, die sich in einer zweiten Distanz von der Stützstruktur (27) befindet, die kürzer ist als die erste Distanz; und
vollständiges Stoppen des Fahrzeugs (7), bevor ein jeweiliges der äußeren Stoßfängerschaftenden (30, 31) des mindestens einen des ersten und des zweiten Stoßfängerschafts (2, 3) seine innerste Position erreicht hat.

13. Verfahren nach Anspruch 12, des Weiteren umfassend, nachdem die Stoßfängerleiste (1) mit einem Hindernis außermittig in Bezug auf das Fahrzeug (7) in Kontakt gekommen ist, Bewegen nur jenes Stoßfängerschafts des ersten und des zweiten Stoßfängerschafts (2, 3), der einer Position, wo die Stoßfängerleiste (1) mit einem Objekt in Kontakt kommt, am nächsten liegt, von seiner äußersten Position zu der inneren Position, während der andere des ersten bzw. des zweiten Stoßfängerschafts (2, 3) im Wesentlichen in seiner äußersten Position verbleibt.

14. Verfahren nach Anspruch 12, des Weiteren umfassend, nachdem die Stoßfängerleiste (1) mit einem Hindernis außermittig in Bezug auf das Fahrzeug (7) in Kontakt gekommen ist, Bewegen sowohl des ersten als auch des zweiten Stoßfängerschafts (2, 3) von ihren äußersten Positionen einwärts zu einer inneren Position, wobei jener Stoßfängerschaft des ersten und des zweiten Stoßfängerschafts (2, 3), der einer Position am nächsten liegt, wo die Stoßfängerleiste (1) mit einem Objekt in Kontakt kommt, um eine längere Distanz einwärts zu einer inneren Position geschoben wird als der andere des ersten und des zweiten Stoßfängerschafts (2, 3), der weiter von der Stelle entfernt ist, wo die Stoßfängerleiste (1) mit dem Objekt in Kontakt kommt.

## Revendications

1. Ensemble pare-chocs de sécurité (25) pour un véhicule (7) coupant un moteur de véhicule (10) lorsque le véhicule (7) heurte un obstacle, ledit ensemble pare-chocs de sécurité (25) comprenant :
une barre de pare-chocs (1) ;
au moins une première tige de pare-chocs (2) et une seconde tige de pare-chocs (3), chacune d'elles ayant une partie de tige de pare-chocs extérieure (35) avec une extrémité de tige extérieure (30, 31) et une partie de tige de pare-chocs intérieure (36) espacée de la partie de tige de pare-chocs extérieure (35) et ayant une extrémité de tige intérieure, dans lequel lesdites parties de tige de pare-chocs extérieures (35) de la première tige de pare-chocs (2) et de la seconde tige de pare-chocs (3) sont rapportées sur la barre de pare-chocs (1) ;
une structure de support (27) recevant ledites au moins première et seconde tiges de pare-chocs (2, 3) sur leurs parties de tige de pare-chocs intérieures (36) respectives d'une manière mobile ;
un premier élément de résistance (20) précontraignant la première tige de pare-chocs (2) et un second élément de résistance (21) précontraignant la seconde tige de pare-chocs (3) vers des positions respectives les plus à l'extérieur où lesdites extrémités de tige de pare-chocs extérieures (30, 31) sont espacées de la structure de support (27) d'une première distance ; et
un commutateur (40) actionné par un mouvement vers l'intérieur d'au moins une des première et seconde tiges de pare-chocs (2, 3) lorsqu'au moins une des extrémités de tige de pare-chocs extérieures (30, 31) de ladite au moins une tige parmi les première et seconde tiges de pare-chocs (2, 3) a atteint une position intérieure qui est située à une seconde distance de la structure de support (27) qui est plus courte que ladite première distance ;
**caractérisé en ce que**
la première tige de pare-chocs (2) et la seconde tige de pare-chocs (3) sont mobiles l'une par rapport à l'autre ; et
la première tige de pare-chocs (2) est articulée par une première articulation (17) à la barre de pare-chocs (1) permettant ainsi essentiellement un seul mouvement de rotation entre la première tige de pare-chocs (2) et la barre de pare-chocs (1), et la seconde tige de pare-chocs (3) est articulée par une seconde articulation (18) à la barre de pare-chocs (1) permettant ainsi à la fois un mouvement de rotation et un mouvement linéaire entre la seconde tige de pare-chocs (3) et la barre de pare-chocs (1).

2. Ensemble pare-chocs de sécurité (25) selon la revendication 1, dans lequel la structure de support (27) comprend au moins un parmi des coussinets de glissement linéaires ou des roulements à billes linéaires (34) supportant les parties de pare-chocs intérieures (36) desdites première et seconde tiges de pare-chocs (2, 3) d'une façon pouvant glisser linéairement par rapport à la structure de support (27).

3. Ensemble pare-chocs de sécurité (25) selon la revendication 1, dans lequel ladite seconde articulation (18) comprend un trou oblong (19) s'étendant dans ladite position la plus à l'extérieur de manière sensiblement perpendiculaire aux première et seconde tiges de pare-chocs (2, 3) respectives.

4. Ensemble pare-chocs de sécurité (25) selon la revendication 1, dans lequel les premier et second éléments de résistance (20, 21) sont un parmi des vérins à gaz et des ressorts.

5. Ensemble pare-chocs de sécurité (25) selon la revendication 1, dans lequel les parties de tige de pare-chocs intérieures (36) d'au moins une desdites première et seconde tiges de pare-chocs (2, 3) ont une extrémité chanfreinée (37) qui vient en prise avec le commutateur (40) lorsque ladite au moins une desdites première et seconde tiges de pare-chocs (2, 3) s'est déplacée de sa position respective la plus à l'extérieur vers la position intérieure, en coupant le moteur de véhicule (10) lorsque la tige respective parmi lesdites première et seconde tiges de pare-chocs (2, 3) a atteint la position intérieure.

6. Ensemble pare-chocs de sécurité (25) selon la revendication 1, dans lequel un premier élément de butée (41) est rapporté sur la partie de tige intérieure (36) d'au moins une desdites première et seconde tiges de pare-chocs (2, 3) et vient en prise avec un second élément de butée (42) respectif lorsqu'au moins une des première et seconde tiges de pare-chocs (3) est précontrainte par les éléments de résistance (20, 21) vers sa position la plus à l'extérieur.

7. Ensemble pare-chocs de sécurité (25) selon la revendication 6, dans lequel le premier élément de butée (41) est rapporté sur une face d'extrémité (43) au niveau de l'extrémité intérieure de ladite au moins une tige parmi les première et seconde tiges de pare-chocs (2, 3) et repose contre la structure de support (27) ou le châssis de véhicule (28) ou des éléments rapportés sur celui-ci lorsqu'au moins une des première et seconde tiges de pare-chocs (2, 3) est précontrainte par les éléments de résistance (20, 21) vers la position la plus à l'extérieur.

8. Véhicule (7) comprenant l'ensemble pare-chocs de sécurité (25) selon la revendication 1, comprenant en outre :
un moteur de véhicule (10) ;
un châssis de véhicule (28) supportant des roues de véhicule (11) ;
un avant de véhicule où l'ensemble pare-chocs de sécurité (25) est rapporté dans une position telle que la barre de pare-chocs (1) forme une partie de véhicule la plus à l'avant lorsqu'au moins une parmi la première tige de pare-chocs (2) et la seconde tige de pare-chocs (3) prend sa position la plus à l'extérieur ;
dans lequel la structure de support (27) est intégrée dans le châssis de véhicule (28).

9. Véhicule (7) selon la revendication 8, dans lequel la structure de support (27) est intégrée dans le châssis de véhicule (28) par un élément (29) en polyéthylène à masse moléculaire très élevée (UHMW) inséré dans le châssis de véhicule (28), dans lequel ledit élément en UWHM (29) porte au moins un parmi des coussinets de glissement linéaires ou des roulements à billes linéaires (34) supportant les première et seconde tiges de pare-chocs (2, 3) d'une façon pouvant glisser linéairement par rapport à l'élément en UWHM (29).

10. Véhicule (7) selon la revendication 8, dans lequel le châssis de véhicule (28) comprend des poutres de châssis de véhicule s'étendant dans la direction longitudinale du véhicule (7) et la structure de support (27) comprend des roulements à billes (34) rapportés sur les poutres de châssis de véhicule.

11. Véhicule (7) selon la revendication 8, dans lequel ledit ensemble pare-chocs de sécurité (25) est un premier ensemble pare-chocs de sécurité (25) et le véhicule (7) comprend en outre un second ensemble pare-chocs de sécurité (26) sous et plus près de la structure de support (27) que la barre de pare-chocs (1) dudit ensemble pare-chocs de sécurité (25), ledit second ensemble pare-chocs de sécurité (26) comprenant un matériau souple résilient qui est comprimé en venant en contact avec un obstacle, dans lequel un commutateur est actionné dans l'état comprimé du second ensemble pare-chocs (26) qui coupe le moteur de véhicule (10).

12. Procédé de fonctionnement d'un véhicule (7) selon la revendication 8, comprenant de :
lorsque la barre de pare-chocs (1) est entrée en contact avec un obstacle, actionner un commutateur (40) en coupant le moteur de véhicule (10), dans lequel le commutateur (40) est actionné par un mouvement vers l'intérieur d'au moins une des première et seconde tiges de pare-chocs (2, 3) lorsqu'au moins une des extrémités de tige de pare-chocs extérieures (30, 31) de ladite au moins une des première et seconde tiges de pare-chocs (2, 3) a atteint une position intérieure qui est située à une seconde distance de la structure de support (27) qui est plus courte que ladite première distance ; et
arrêter le véhicule (7) dans son intégralité avant qu'une extrémité respective des extrémités de tige de pare-chocs extérieures (30, 31) de ladite au moins une desdites première et seconde tiges de pare-chocs (2, 3) ait atteint sa position la plus à l'intérieur.

13. Procédé selon la revendication 12, comprenant en outre, lorsque la barre de pare-chocs (1) est entrée en contact avec un obstacle désaxé par rapport au véhicule (7), de déplacer uniquement la tige de pare-chocs parmi lesdites première et seconde tiges de pare-chocs (2, 3) qui est la plus près d'une position où la barre de pare-chocs (1) entre en contact avec un objet de sa position la plus à l'extérieur à la position intérieure, tandis que l'autre tige respective parmi les première et seconde tiges de pare-chocs (2, 3) reste sensiblement dans sa position la plus à l'extérieur.

14. Procédé selon la revendication 12, comprenant en outre, lorsque la barre de pare-chocs (1) est entrée en contact avec un obstacle désaxé par rapport au véhicule (7), de déplacer à la fois lesdites première et seconde tiges de pare-chocs (2, 3) vers l'intérieur de leurs positions les plus à l'extérieur à une position intérieure, dans lequel la tige de pare-chocs des première et seconde tiges de pare-chocs (2, 3) qui est le plus près d'une position où la barre de pare-chocs (1) entre en contact avec un objet, est poussée vers l'intérieur jusqu'à une position intérieure sur une distance plus longue que l'autre desdites première et seconde tiges de pare-chocs (2, 3) qui est plus éloignée de l'emplacement où la barre de pare-chocs (1) entre en contact avec l'objet.
